# EUROPEAN PATENT SPECIFICATION

(11) **EP 4 280 366 B1**
(45) Date of publication and mention of the grant of the patent: **15.07.2026**
(21) Application number: 23173250.4
(22) Date of filing: 12.05.2023
(51) Int. Cl.: H01M 50/342, H01M 50/195, H01M 50/152, H01M 50/186, H01M 50/191, H01M 50/193, H01M 50/578

(54) **CAP ASSEMBLY, METHOD FOR MAKING ITS CONNECTOR, AND BATTERY WITH THIS CAP ASSEMBLY**
KAPPENANORDNUNG, VERFAHREN ZUR HERSTELLUNG IHRES VERBINDERS UND BATTERIE MIT DIESER KAPPENANORDNUNG
ENSEMBLE CAPUCHON, PROCÉDÉ DE FABRICATION DE SON CONNECTEUR ET BATTERIE AVEC CET ENSEMBLE CAPUCHON

(30) Priority: 20.05.2022 CN 202210557033
(43) Date of publication of application: 22.11.2023
(73) Proprietor: Techtronic Cordless GP, Anderson, SC 29621 (US)
(72) Inventor: LI, Kun, Dongguan City (CN); LIN, Guang Peng, Dongguan City (CN)
(74) Representative: Meissner Bolte Partnerschaft mbB

(56) References cited:
- US-A- 4 943 497
- US-A1- 2016 099 443
- US-A1- 2018 123 163
- US-A1- 2018 198 108

## Description

### TECHNICAL FIELD

The present application relates to a cap assembly for a battery. The present application further relates to a method for making the cap assembly, and a battery comprising the cap assembly.

### BACKGROUND ART

A battery is a common electrical energy storage device. A cap assembly is generally disposed on the positive pole of the battery. The cap assembly includes a connector and a pressure relief piece. A connecting part of the pressure relief piece is electrically connected to a central part of the connector via a current interrupt device (CID). An internal insulating washer is disposed on a peripheral part of the connector so that the connector is separated from the pressure relief piece at the peripheral part and at the transition part between the peripheral part and the central part. When an external short circuit occurs in the battery, a large current will flow through the cell and the pole tabs, generating a lot of heat. After the cell generates heat, on one hand, the heat will fuse the positive pole tab to break the circuit; on the other hand, the generated heat will cause the materials inside the battery to react with chemical substances to generate gases, resulting in an increase in the internal pressure of the cell. When the internal pressure of the cell increases to the overturning gas pressure of the pressure relief piece, it will cause the deformation part of the pressure relief piece to turn over/deform so that the current interrupt device is disconnected, that is, the electrical connection between the connecting part of the pressure relief piece and the central part of the connector is cut off, resulting in a circuit break. A certain sequence exists for the above-mentioned two circuit break modes. When the short circuit internal resistance is small, the short circuit current is very large, which will lead to early fusing of the positive pole tab. When the short circuit current is small, the accumulation of generated gases inside the cell will cause the pressure relief piece to turn over first, resulting in a circuit break. For the second type of circuit break caused by the overturning of the pressure relief piece, the internal insulating washer plays a key insulating role when the pressure relief piece turns over. However, prolonged thermal accumulation at large short-circuit currents can cause thermal melting of the internal insulating washer, and there is a certain probability of risk of the pressure relief piece being reconnected to the connector, resulting in the re-occurrence of a short circuit in the peripheral part and affecting the safety of the cell in the case of an external short circuit.

A prior solution is to increase the thermal stability of the internal insulating washer and the thermal deformation temperature. Therefore, the currently most commonly used material of the internal insulating washer is changed from polybutylene terephthalate (PBT) to perfluoroalkoxy (PFA). However, the overall thermoforming temperature of PFA is high, which increases the costs of the cell to some extent.

Additionally, an unnoticed and even often overlooked situation is that the internal insulating washer cannot cover the transition part between the peripheral part and central part of the connector due to installation limitations, and this transition part may form an electrical connection to the pressure relief piece in the event of abnormal overturning/deformation of the pressure relief piece, regardless of whether the internal insulating washer is thermally fused or not, resulting in the re-occurrence of short circuit in the transition part and affecting the safety of the cell in the case of an external short circuit.

Patent Literature US 2018/198108 A1, which the preamble of claim 1 is based, is considered relevant for the background of the present invention, and relates to a cap assembly loaded on an open upper end of a metal battery can of a cylindrical secondary battery. The cap assembly includes a top cap located at the uppermost end of the cap assembly to constitute a positive electrode terminal having an outward protruding structure, a safety vent located under the top cap and electrically connected to the top cap via a safety vent for discharging gas, a current interrupt device configured such that a portion of the upper surface of the current interrupt device is connected to the safety vent and a portion of the lower surface of the current interrupt device is connected to an electrode lead of an electrode assembly, the portion of the current interrupt device connected to the safety vent being configured to rupture when high pressure is generated in the battery, whereby the current interrupt device is separated from the safety vent to interrupt the flow of current, and a current interrupt device (CID) gasket coupled to the current interrupt device so as to wrap an outer circumferential part of the current interrupt device excluding portions of the current interrupt device that are connected to electrode tabs and the safety vent in order to secure the electrical insulation property of the current interrupt device, wherein an insulative coating layer made of an electrically insulative material is formed on the outer circumferential part of the current interrupt device.

### SUMMARY OF THE INVENTION

The purpose of the present invention is to provide a cap assembly for a battery. The cap assembly improves the safety of the battery in the case of an external short circuit and is cost-effective.

The cap assembly according to the claimed invention is outlined in independent claim 1.

In an embodiment, an insulating coating is also applied to the peripheral side of the connector.

Preferably, the insulating coating is an inorganic coating and the inorganic coating comprises inorganic particles, a binding agent, and a solvent; more preferably, the inorganic particles are aluminium oxide (Al2O3) or boehmite (AlOOH), the binding agent is polyvinylidene fluoride (PVDF), and/or the solvent is N-methyl pyrrolidone (NMP).

Preferably, the overall solid content of the inorganic particles is 40%-70%, the size of the inorganic particles is 0.3 µm-5 µm, and/or the thickness of the insulating coating is 20 µm-100 µm.

In an embodiment, the thickness of the insulating coating on the peripheral part is greater than the thickness of the insulating coating on the transition part.

In an embodiment, the current interrupt device includes at least one welding point between the pressure relief piece and the connector. Preferably, the welding point can be destroyed under the action of a force. Preferably, the force is applied to the pressure relief piece by the internal pressure of the cell.

In an embodiment, a through hole is disposed on the connector. Preferably, the through hole is disposed on the transition part of the connector to discharge gases generated by the cell to the pressure relief piece so that the pressure relief piece can turn over when the internal pressure of the cell exceeds the overturning gas pressure of the pressure relief piece.

Another purpose of the present invention is to provide a method, according to independent claim 10, for making the cap assembly according to the invention as outlined in any of claims 1-9.

In an embodiment, the thickness of the single-sided coating is controlled through the application time and/or slurry addition amount.

In an embodiment, the thickness of the coating formed on the peripheral part of the connector is greater than the thickness of the coating on the transition part.

Another purpose of the present invention is to provide a battery, comprising the cap assembly.

For the cap assembly according to the present invention, an insulating coating is applied to the peripheral part and transition part of the connector on one side facing the pressure relief piece, so a reconnection between the connector and the overturned pressure relief piece caused by thermal melting of the internal insulating washer and by abnormal overturning/deformation of the pressure relief piece can be effectively prevented. Additionally, the cap assembly and the method for making a connector for the cap assembly may have the following advantages:
1. They are cost-effective;
2. An electrical reconnection between the connector and the pressure relief piece on the peripheral side caused by the deformation of the connector at the peripheral part in the case of thermal melting of the internal insulating washer can be prevented;
3. The effect of insulation degradation of the insulating coating caused by the wear between the peripheral part of the connector and the internal insulating washer can be counteracted;
4. The thickness of the insulating coating can be effectively controlled.

### BRIEF DESCRIPTION OF THE DRAWINGS

To better understand the above and other objectives, features, advantages and functions of the present invention, reference may be made to the preferred embodiments shown in the drawings. In the drawings, identical reference symbols denote identical components. Those skilled in the art should understand that the drawings are intended to illustrate preferred embodiments of the present invention schematically, and have no limiting effect on the scope of the present invention, and the various components in the drawings are not drawn to scale.
Fig. 1 is a 3D exploded view of a battery with a cap assembly according to the present invention;
Fig. 2 is a longitudinal sectional view of an upper part of a battery with a cap assembly according to the present invention;
Fig. 3 is a 3D exploded view of a cap assembly according to the present invention;
Fig. 4 is a plan of a connector for a cap assembly according to the present invention;
Fig. 5a is a cross-sectional view of a connector for the cap assembly according to the first embodiment of the present invention;
Fig. 5b is a cross-sectional view of a connector for the cap assembly according to the second embodiment of the present invention;
Fig. 5c is a cross-sectional view of a connector for the cap assembly according to the third embodiment of the present invention.
Fig. 6 is a cross-sectional view of a connector for a cap assembly according to the present invention when it is fabricated.

### SPECIFIC DESCRIPTION

Specific embodiments of the present invention are now described in detail by referring to the drawings. The embodiments described here are merely preferred embodiments of the present invention. Based on these preferred embodiments, those skilled in the art will be able to think of other ways in which the present invention could be implemented, all of which likewise fall within the scope of the present invention.

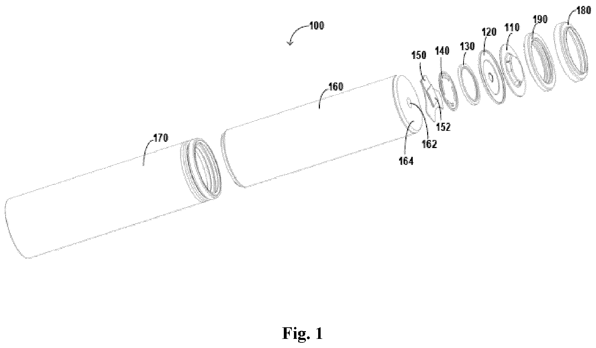

Fig. 1 is a 3D exploded view of a battery 100 with a cap assembly according to the present invention. In this embodiment, the battery 100 mainly comprises a shell 170 and a cell 160. The shell 170 is formed into a cylindrical hollow cavity and has an opening at one end. The cell 160 is cylindrical and is accommodated in the shell 170 through the opening of the shell 170. The cell 160 presents different polarities at two ends (which is determined by the structure of the cell, known to those skilled in the art, and omitted here). Preferably, the cell 160 is electrically connected to the bottom (not shown) of the shell 170 at a lower end (not shown) serving as a negative pole.

The battery 100 further comprises a cap assembly, the cap assembly comprising a connector 140, a pressure relief piece 120, and an internal insulating washer 130. The pressure relief piece 120 is located outside the cell 160 of the battery 100 with respect to the connector 140. The connector 140 is electrically connected to an upper end 164, preferably serving as a positive pole, of the cell 160 via a contact piece 150 on one side. A central part on the other side of the connector is electrically connected to the pressure relief piece 120 via a CID and the connector 140 is separated from the pressure relief piece 120 through the internal insulating washer 130 on a peripheral part on this other side, forming electrical insulation from the pressure relief piece 120 on the peripheral part and the transition part between the peripheral part and the central part.

Additionally, the cap assembly may further comprise a cap 110, the cap 110 being electrically connected to the pressure relief piece 120 on one side and protruding outwards to form a positive terminal of the battery 100 on the other side.

Additionally, the battery 100 may further comprise: a first external insulating washer 180, the first external insulating washer 180 being used to separate the upper end 164 of the cell 100 from the shell 170 to form electrical insulation; and a second external insulating washer 190, the second external insulating washer 190 being used to separate the cap assembly from the shell 170 to form electrical insulation. Therefore, the battery 100 forms a negative terminal at the shell 170, particularly at the bottom of the shell 170 and a positive terminal at the cap assembly, particularly at a protruding part of the cap 110.

It is important to note that the battery 100 in this embodiment is an all-tab battery, the cell 160 is flattened on two ends to form flat end faces, and the contact piece 150 is electrically connected to the upper end 164 of the cell 160 through its bottom part with a larger area and to the connector 140 of the cap assembly through its contact 152 with a smaller area accordingly. In other embodiments, the battery may be a single-tab or multi-tab battery and the cell 160 is electrically connected to the connector 140 of the cap assembly through a lead-out tab. In the two embodiments, the contact 152 and the tab are designed to easily fuse at high temperature, resulting in a circuit break between the cell 160 and the connector 140.

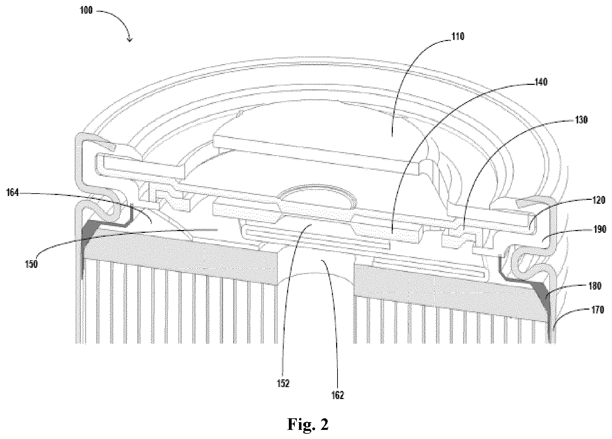

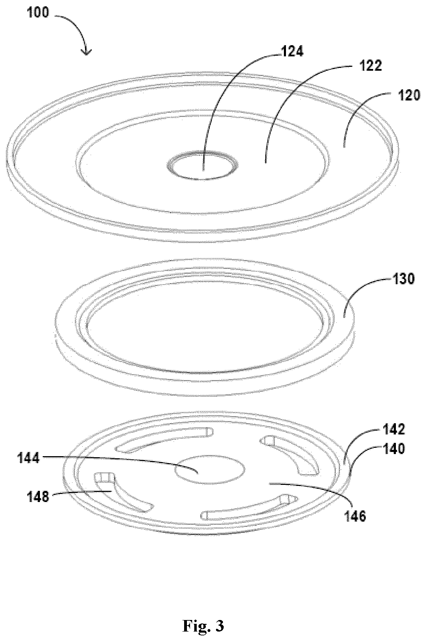

The specific structure of the cap assembly and the situation that will occur in the battery 100 during an external short circuit, particularly the change in the cap assembly, will be further described below with the aid of Figs. 2 and 3.

Referring to Figs. 2 and 3, the connector 140 is roughly disc-shaped and comprises a central part 144 and a peripheral part 142, and a transition part 146 between the former two parts as well as a through hole 148 preferably disposed in the transition part 146. The through hole 148 achieves gas connectivity on both sides of the connector 140. In particular, it allows gases generated in the cell 160 to flow through a central hole 162 at the upper end 164 of the cell 160 and the through hole 148 of the connector 140 to reach one side of the pressure relief piece 120 facing the connector 140.

The pressure relief piece 120 is also roughly disc-shaped and preferably comprises a deformation part 122 at the center, the deformation part 122 preferably comprising a connecting part 124 at the center, wherein the connecting part 124 of the pressure relief piece 120 protrudes towards the connector 140 and is electrically connected to the connector 140 via the CID. In one embodiment, the CID includes at least one welding point between the pressure relief piece 120 and the connector 140, particularly between the connecting part 124 of the pressure relief piece 120 and the central part 144 of the connector 140. Preferably, the welding point can be destroyed under the action of a force. In particular, this destroying force is implemented by gases acting on the pressure relief piece 120 and the minimum gas pressure that can destroy the welding point is the overturning gas pressure of the pressure relief piece. In particular, the pressure relief piece 120 is designed so that when the force applied to the pressure relief piece 120 by gases destroys the welding point, i.e. disconnects the CID, it can lead to the deformation of the deformation part 122. This causes the deformation part 122 to protrude towards the side far away from the connector 140 so that the connecting part 124 is away from the central part 144 of the connector 140, resulting in a circuit break between the pressure relief piece 120 and the connector 140. This is the overturning of the pressure relief piece 120.

When an external short circuit occurs in the positive and negative terminals of the battery 100, for example, when they are directly electrically connected by a lead, a large current will flow through the cell 160 and the contact 152 or tab, generating a lot of heat. After the cell 160 generates heat, on one hand, the heat will fuse the contact 152 or tab, generating a circuit break, as described above. On the other hand, the generated heat will cause the materials inside the cell 160 to react with chemical substances to generate gases, resulting in an increase in the internal pressure of the cell. Gases will flow through the central hole 162 at the upper end 164 of the cell 160 and the through hole 148 of the connector 140 to reach one side of the pressure relief piece 120 facing the connector 140, as described above. When the internal pressure of the cell increases to the overturning gas pressure of the pressure relief piece 120, it will disconnect the CID and cause the deformation part 122 of the pressure relief piece 120 to turn over/deform so that the electrical connection between the pressure relief piece 120 and the connector 140 is cut off, resulting in a circuit break. A certain sequence exists for the above-mentioned two circuit break modes. When the short circuit internal resistance is small, the short circuit current is large, which will lead to early fusing of the contact 152 or tab. When the short circuit internal resistance is large and the short circuit current is small, the accumulation of generated gases inside the cell 160 will cause the pressure relief piece 120 to turn over first, resulting in a circuit break. In the second case, the internal insulating washer 130 plays a key insulating role when the pressure relief piece 120 turns over. However, prolonged thermal accumulation at large short-circuit currents may cause thermal melting of the internal insulating washer 130 so that the electrical reconnection to the pressure relief piece 120 occurs in the peripheral part 142 of the connector 140, and a short circuit persists, affecting the safety of the battery 100 in the above-mentioned case of an external short circuit.

The internal insulating washer 130 cannot cover the transition part 146 of the connector 140 due to the fabrication and installation limitations. This is particularly because the through hole 148 is disposed in the connector 140. If the internal insulating washer 130 is constructed to radially extend beyond the through hole 148 inwards, the through hole 148 may be covered by the internal insulating washer 130 so that the gas channel formed by the through hole 148 is blocked, causing the pressure relief piece 120 to fail to turn over normally. Additionally, in some embodiments, the deformation part 122 of the pressure relief piece 120 shows a state of protruding towards the connector 140 when the pressure relief piece 120 remains connected to the connector 140. Therefore, the distance between the pressure relief piece 120 and the connector 140 gradually reduces in the inward direction in the transition part 146 so that there is not enough space between the pressure relief piece 120 and the connector 140 to accommodate the internal insulating washer that further radially extends inwards.

When the pressure relief piece 120 abnormally turns over/deforms due to material problems or sudden increase in the gas pressure, for example, when part of the deformation part 122 protrudes towards the transition part 146 of the connector 140 due to the bursting of the deformation part 122 of the pressure relief piece 120, the connector 140 may be electrically connected to the pressure relief piece 120 in the transition part 146 regardless of thermal melting of the internal insulating washer 130 so that a short circuit reoccurs in the transition part 146, affecting the safety of the battery 100 in the above-mentioned case of an external short circuit.

Therefore, in the cap assembly according to the present invention, an insulating coating is applied to one side of the connector 140 facing the pressure relief piece 120, to the peripheral part 142, and to the transition part 146 so that a circuit break between the connector 140 and the pressure relief piece 120 can still be achieved after the overturning of the pressure relief piece 120 even if thermal melting of the internal insulating washer 130 and/or abnormal overturning of the pressure relief piece 120 occur.

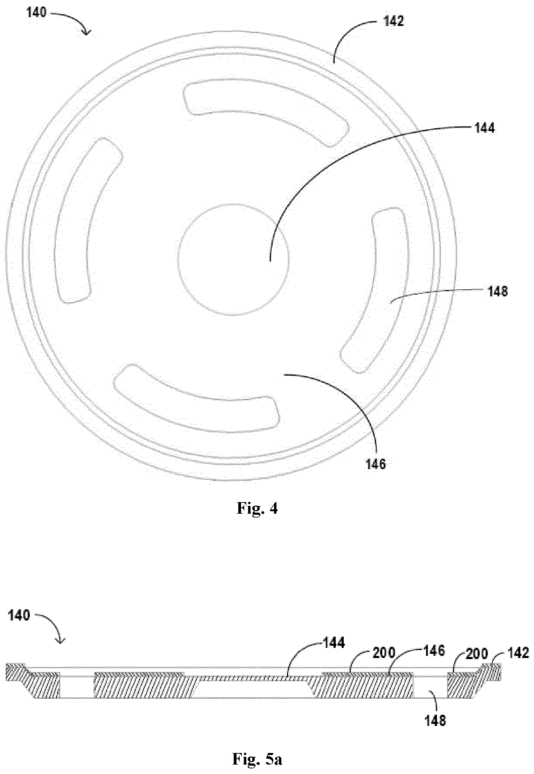

Referring to Figs. 5a-5c, three embodiments of the connector 140 for the cap assembly of the present invention will be further described below.

In a first embodiment, referring to Fig. 5a, an insulating coating 200 is applied to the peripheral part 142 and transition part 146 of the connector 140. The insulating coating 200 on the peripheral part 142 ensures that the circuit break between the connector 140 and the pressure relief piece 120 can still be achieved even after thermal melting of the internal insulating washer 130. The insulating coating 200 on the transition part 146 ensures that the circuit break between the connector 140 and the pressure relief piece 120 can still be achieved even after abnormal overturning of the pressure relief piece 120.

It can also be seen from the figure that no insulating coating is applied to the central part 144 to ensure that the connector 140 can form electrical connection to the pressure relief piece 120 at the central part 144 via the CID.

Additionally, the insulating coating 200 may be inorganic coating, comprising inorganic particles, a binding agent, and a solvent. In a preferred embodiment, the inorganic particles are aluminium oxide or boehmite, the binding agent is polyvinylidene fluoride, and/or the solvent is N-methyl pyrrolidone. Preferably, the overall solid content of the inorganic particles is controlled at 40%-70% and the size of the inorganic particles is controlled at 0.3 µm-5 µm.

In this embodiment, the insulating coating 200 has the same thickness. The thickness of the insulating coating 200 is particularly limited by the internal insulating washer 130. Too thick an insulating coating 200 will take up the space of the internal insulating washer 130 while too thin an insulating coating 200 may not have adequate insulation. Preferably, the thickness of the insulating coating 200 is 20 µm-100 µm.

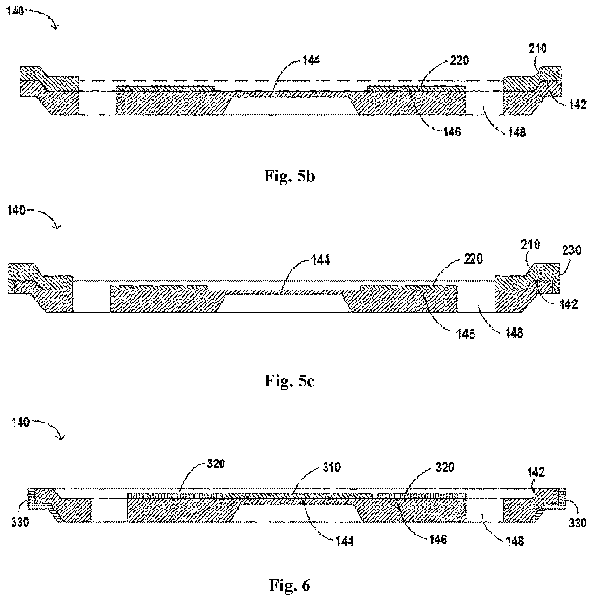

In a second embodiment, referring to Fig. 5b, different from the first embodiment, a first insulating coating 210 is applied to the peripheral part 142 of the connector 140 and a second insulating coating 220 is applied to the transition part 146 of the connector 140, wherein the thickness of the first insulating coating 210 is greater than the thickness of the second insulating coating 220. On one hand, the possibility of thermal melting of the internal insulating washer 130 is higher than the possibility of abnormal overturning of the pressure relief piece 120, so the first insulating coating 210 set for thermal melting of the internal insulating washer 130 generally tends to be made thicker. On the other hand, the second insulating coating 220 does not contact any component and is not easily worn under normal circumstances while the first insulating coating 210 always contacts the internal insulating washer and may be worn during transportation and use, so the first insulating coating 210 must be designed to have the larger thickness to counteract the effect of insulation degradation caused by the above-mentioned wear.

In a third embodiment, referring to Fig. 5c, different from the second embodiment, an insulating coating 230 is also applied to the peripheral side of the connector 140. The insulating coating 230 is used to prevent an electrical reconnection between the connector 140 and the pressure relief piece 120 on the peripheral side caused by the deformation of the connector 140 at the peripheral part 142 in the case of thermal melting of the internal insulating washer 120.

Referring to Fig. 6, a method for making the connector 140 for the cap assembly of the present invention will be described in detail below.

The connector 140 of the cap assembly according to the present invention can be made according to the following steps: fully dissolve the binding agent in the solvent; mix the inorganic particles into the solvent; fully mix the mixture well to form slurry of high stability and fluidity; make a single side of the connector 140 face upward and cover the central part 144 of the connector 140 with a first covering patch 310 to prevent the central part 144 from being coated with slurry; apply the slurry to the connector 140 using the spraying or printing coating method; and dry the connector 140 coated with the slurry within the range of 80-120°C to obtain the connector 140 with a single-sided coating. Here, the single-sided coating means that an insulating coating is applied to one side of the connector 140 facing the pressure relief piece 120 or to the peripheral side of the connector 140 while no insulating coating is applied to the side of the connector 140 facing away from the pressure relief piece 120. The sequence of the above-mentioned steps is not strictly limited. For example, Steps 1 and 2 can occur at the same time.

In a preferred embodiment, the inorganic particles are aluminium oxide or boehmite, the binding agent is polyvinylidene fluoride, and/or the solvent is N-methyl pyrrolidone. The cost of these raw materials and the difficulty in implementing the spraying or printing coating process are low. In addition, it is unnecessary to change the manufacturing process of other components of the cap assembly and the assembly method of the cap assembly. Therefore, it is very cost-effective to use this method to manufacture the connector 140 of the cap assembly and reduce the risk of reconnection due to a short circuit of the battery.

Additionally, the thickness of the insulating coating may be effectively controlled through the application time and/or slurry addition amount. For example, consideration can be given to spraying the peripheral part 142 for a longer time so that an insulating coating thicker than the insulating coating on the transition part 146 of the connector 140 is formed on the peripheral part 142 of the connector 140, as shown in Fig. 5b. Specifically, a second covering patch 320 may be additionally used to cover the transition part 146 of the connector 140, one side of the connector 140 facing the pressure relief piece 120 is evenly sprayed for a first time, the second covering patch 320 is removed, and one side of the connector 140 facing the pressure relief piece 120 is evenly sprayed for a second time so that the peripheral part 142 is sprayed for a longer length of time, effectively allowing the thickness of the insulating coating on the peripheral part 142 to be greater than the thickness of the insulating coating on the transition part 146.

Additionally, a third covering patch 330 may be used to cover the peripheral side of the connector 140 and/or a fourth covering patch (not shown) may be used to cover the through hole 148 of the connector 140 so that no insulating coating is applied to the peripheral side of the connector 140 and/or the internal side of the through hole 148. Accordingly, removing the third covering patch 330 enables the application of an insulating coating to the peripheral side of the connector 140.

The above description of various embodiments of the present invention is provided for a person of ordinary skill in the art for descriptive purposes. It is not intended that the present invention be exclusive or be limited to a single disclosed embodiment. As mentioned above, those skilled in the art will understand various alternatives and variations of the present invention. Thus, although some alternative embodiments have been specifically described, those skilled in the art will understand, or develop with relative ease, other embodiments. The present invention is intended to include all alternatives, modifications and variants of the present invention described here, as well as other embodiments which fall within the scope of the present invention as defined by the appended claims.
Key to the drawings:
- 100: Battery
- 110: Cap
- 120: Pressure relief piece
- 122: Deformation part
- 124: Connecting part
- 130: Internal insulating washer
- 140: Connector
- 142: Peripheral part
- 144: Central part
- 146: Transition part
- 148: Through hole
- 150: Contact piece
- 152: Contact
- 160: Cell
- 162: Center hole
- 164: Upper end
- 170: Shell
- 180: First external insulating washer
- 190: Second external insulating washer
- 200: Insulating coating
- 210: First insulating coating
- 220: Second insulating coating
- 310: First covering patch
- 320: Second covering patch
- 330: Third covering patch

## Claims

1. A cap assembly for a battery (100), comprising:
a connector (140), the connector (140) comprising a central part (144), a peripheral part (142), and a transition part (146) between the former two parts, wherein a current interrupt device is disposed on the central part (144);
a pressure relief piece (120), the pressure relief piece (120) being located in use
outside a cell (160) of the battery (100) with respect to the connector (140), the pressure relief piece (120) being electrically connected to the connector (140) via the current interrupt device, and being able to turn over when the internal pressure of the cell (160) exceeds an overturning gas pressure of the pressure relief piece (120) so as to disconnect the current interrupt device, cutting off the electrical connection between the pressure relief piece (120) and the connector (140);
an internal insulating washer (130), the internal insulating washer (130) being disposed on the peripheral part (142) of the connector (140) on the side facing the pressure relief piece (120),
**characterised in that** an insulating coating (200) is applied to the peripheral part (142) and transition part (146) of the connector (140) on said side facing the pressure relief piece (120).

2. The cap assembly as claimed in claim 1, wherein an insulating coating (230) is also applied to the peripheral side of the connector (140).

3. The cap assembly for a battery (100) as claimed in claim 1 or 2, wherein the insulating coating (200, 230) is an inorganic coating (200, 230).

4. The cap assembly for a battery (100) as claimed in claim 3, wherein the inorganic coating (200, 230) comprises inorganic particles, a binding agent, and a solvent.

5. The cap assembly for a battery (100) as claimed in claim 4, wherein the inorganic particles are aluminium oxide or boehmite, the binding agent is polyvinylidene fluoride, and/or the solvent is N-methyl pyrrolidone.

6. The cap assembly for a battery (100) as claimed in claim 1, wherein the thickness of the insulating coating (200, 230) is 20 µm-100 µm.

7. The cap assembly for a battery (100) as claimed in claim 1, wherein the thickness of the insulating coating (230) on the peripheral part (142) is greater than the thickness of the insulating coating (200) on the transition part (146).

8. The cap assembly for a battery (100) as claimed in claim 1, wherein the current interrupt device includes at least one welding point between the pressure relief piece (120) and the connector (140); preferably, the welding point can be destroyed under the action of a force, and preferably, the force is applied to the pressure relief piece (120) by an internal pressure of the cell (160).

9. The cap assembly for a battery (100) as claimed in claim 1, wherein a through hole (148) is disposed on the connector (140), and preferably, the through hole (148) is disposed on the transition part (146) of the connector (140).

10. A method for making the cap assembly as claimed in any of claims 1 through 9, wherein the step of making the connector (140) for the cap assembly comprises:
fully dissolving a binding agent in a solvent;
mixing inorganic particles into the solvent;
fully mixing the mixture well to form a slurry;
making a single side of the connector (140) face upward and covering a central part (144) of the connector (140);
applying the slurry to the connector (140) using a spraying or printing coating method; and
drying the connector (140) coated with the slurry within the range of 80-120°C to obtain the connector (140) with a single-sided coating.

11. The method as claimed in claim 10, further comprising: controlling the thickness of the single-sided coating through the application time and/or slurry addition amount.

12. The method as claimed in claim 10 or 11, wherein the thickness of the coating (230) formed on the peripheral part (142) of the connector (140) is greater than the thickness of the coating (200) on the transition part (146).

13. A battery (100), comprising the cap assembly as claimed in any one of claims 1 to 9.

## Patentansprüche

1. Kappenanordnung für eine Batterie (100), umfassend:
einen Verbinder (140), wobei der Verbinder (140) einen mittleren Teil (144),
einen Umfangsteil (142) und einen Übergangsteil (146) zwischen den beiden erstgenannten Teilen umfasst, wobei eine Stromunterbrechungsvorrichtung am mittleren Teil (144) angeordnet ist;
ein Druckentlastungselement (120), wobei sich das Druckentlastungselement (120) im Betrieb in Bezug auf den Verbinder (140) außerhalb einer Zelle (160) der Batterie (100) befindet, wobei das Druckentlastungselement (120) über die Stromunterbrechungsvorrichtung elektrisch mit dem Verbinder (140) verbunden ist und in der Lage ist zu verformen, wenn der Innendruck der Zelle (160) einen Verformungsgasdruck des Druckentlastungselements (120) überschreitet, um die Stromunterbrechungsvorrichtung zu trennen und die elektrische Verbindung zwischen dem Druckentlastungselement (120) und dem Verbinder (140) zu unterbrechen;
eine innere Isolierscheibe (130), wobei die innere Isolierscheibe (130) an dem Umfangsteil (142) des Verbinders (140) auf der dem Druckentlastungselement (120) zugewandten Seite angeordnet ist,
**dadurch gekennzeichnet, dass** eine isolierende Beschichtung (200) auf den Umfangsteil (142) und den Übergangsteil (146) des Verbinders (140) auf der dem Druckentlastungselement (120) zugewandten Seite aufgebracht ist.

2. Kappenanordnung nach Anspruch 1, wobei eine isolierende Beschichtung (230) auch auf die Umfangsseite des Verbinders (140) aufgebracht ist.

3. Kappenanordnung für eine Batterie (100) nach Anspruch 1 oder 2, wobei die isolierende Beschichtung (200, 230) eine anorganische Beschichtung (200, 230) ist.

4. Kappenanordnung für eine Batterie (100) nach Anspruch 3, wobei die anorganische Beschichtung (200, 230) anorganische Partikel, ein Bindemittel und ein Lösungsmittel umfasst.

5. Kappenanordnung für eine Batterie (100) nach Anspruch 4, wobei die anorganischen Partikel Aluminiumoxid oder Böhmit sind, das Bindemittel Polyvinylidenfluorid ist und/oder das Lösungsmittel N-Methylpyrrolidon ist.

6. Kappenanordnung für eine Batterie (100) nach Anspruch 1, wobei die Dicke der isolierenden Beschichtung (200, 230) 20 µm bis 100 µm beträgt.

7. Kappenanordnung für eine Batterie (100) nach Anspruch 1, wobei die Dicke der isolierenden Beschichtung (230) auf dem Umfangsteil (142) größer ist als die Dicke der isolierenden Beschichtung (200) auf dem Übergangsteil (146).

8. Kappenanordnung für eine Batterie (100) nach Anspruch 1, wobei die Stromunterbrechungsvorrichtung mindestens einen Schweißpunkt zwischen dem Druckentlastungselement (120) und dem Verbinder (140) umfasst; vorzugsweise kann der Schweißpunkt unter Einwirkung einer Kraft zerstört werden, und vorzugsweise wird die Kraft durch einen Innendruck der Zelle (160) auf das Druckentlastungselement (120) ausgeübt.

9. Kappenanordnung für eine Batterie (100) nach Anspruch 1, wobei ein Durchgangsloch (148) an dem Verbinder (140) angeordnet ist, und vorzugsweise das Durchgangsloch (148) an dem Übergangsteil (146) des Verbinders (140) angeordnet ist.

10. Verfahren zur Herstellung der Kappenanordnung nach einem der Ansprüche 1 bis 9, wobei der Schritt der Herstellung des Verbinders (140) für die Kappenanordnung umfasst:
vollständiges Auflösen eines Bindemittels in einem Lösungsmittel;
Einmischen anorganischer Partikel in das Lösungsmittel;
gründliches Mischen der Mischung, um eine Aufschlämmung zu bilden;
Ausrichten einer Seite des Verbinders (140) nach oben und Abdecken eines mittleren Teils (144) des Verbinders (140);
Auftragen der Aufschlämmung auf den Verbinder (140) unter Verwendung eines Sprüh- oder Druckbeschichtungsverfahrens; und
Trocknen des mit der Aufschlämmung beschichteten Verbinders (140) innerhalb des Bereichs von 80-120 °C, um den Verbinder (140) mit einer einseitigen Beschichtung zu erhalten.

11. Verfahren nach Anspruch 10, ferner umfassend: Steuern der Dicke der einseitigen Beschichtung durch die Auftragszeit und/oder die Zugabemenge der Aufschlämmung.

12. Verfahren nach Anspruch 10 oder 11, wobei die Dicke der auf dem Umfangsteil (142) des Verbinders (140) gebildeten Beschichtung (230) größer ist als die Dicke der Beschichtung (200) auf dem Übergangsteil (146).

13. Batterie (100) umfassend die Kappenanordnung nach einem der Ansprüche 1 bis 9.

## Revendications

1. Ensemble capuchon pour une batterie (100), comprenant :
un connecteur (140), le connecteur (140) comprenant une partie centrale (144), une partie périphérique (142) et une partie de transition (146) entre les deux parties précédentes, dans lequel un dispositif de coupure de courant est disposé sur la partie centrale (144) ;
une pièce de décompression (120), la pièce de décompression (120) étant située, en utilisation, à l'extérieur d'une cellule (160) de la batterie (100) par rapport au connecteur (140), la pièce de décompression (120) étant connectée électriquement au connecteur (140) via le dispositif de coupure de courant et étant capable de basculer lorsque la pression interne de la cellule (160) dépasse une pression de gaz de basculement de la pièce de décompression (120) de manière à déconnecter le dispositif de coupure de courant, coupant ainsi la connexion électrique entre la pièce de décompression (120) et le connecteur (140) ;
une rondelle isolante interne (130), la rondelle isolante interne (130) étant disposée sur la partie périphérique (142) du connecteur (140) du côté faisant face à la pièce de décompression (120),
**caractérisé en ce**
**qu'**un revêtement isolant (200) est appliqué sur la partie périphérique (142) et la partie de transition (146) du connecteur (140) sur ledit côté faisant face à la pièce de décompression (120).

2. Ensemble capuchon selon la revendication 1, dans lequel un revêtement isolant (230) est également appliqué sur le côté périphérique du connecteur (140).

3. Ensemble capuchon pour une batterie (100) selon la revendication 1 ou 2, dans lequel le revêtement isolant (200, 230) est un revêtement inorganique (200, 230).

4. Ensemble capuchon pour une batterie (100) selon la revendication 3, dans lequel le revêtement inorganique (200, 230) comprend des particules inorganiques, un agent liant et un solvant.

5. Ensemble capuchon pour une batterie (100) selon la revendication 4, dans lequel les particules inorganiques sont de l'oxyde d'aluminium ou de la boehmite, l'agent liant est du polyfluorure de vinylidène et/ou le solvant est de la N-méthylpyrrolidone.

6. Ensemble capuchon pour une batterie (100) selon la revendication 1, dans lequel l'épaisseur du revêtement isolant (200, 230) est comprise entre 20 µm et 100 µm.

7. Ensemble capuchon pour une batterie (100) selon la revendication 1, dans lequel l'épaisseur du revêtement isolant (230) sur la partie périphérique (142) est supérieure à l'épaisseur du revêtement isolant (200) sur la partie de transition (146).

8. Ensemble capuchon pour une batterie (100) selon la revendication 1, dans lequel le dispositif de coupure de courant inclut au moins un point de soudure entre la pièce de décompression (120) et le connecteur (140) ; de préférence, le point de soudure peut être détruit sous l'action d'une force, et de préférence, la force est appliquée à la pièce de décompression (120) par une pression interne de la cellule (160).

9. Ensemble capuchon pour une batterie (100) selon la revendication 1, dans lequel un trou traversant (148) est disposé sur le connecteur (140), et de préférence, le trou traversant (148) est disposé sur la partie de transition (146) du connecteur (140).

10. Procédé de fabrication de l'ensemble capuchon selon l'une quelconque des revendications 1 à 9, dans lequel l'étape de fabrication du connecteur (140) pour l'ensemble capuchon comprend les opérations consistant à :
dissoudre complètement un agent liant dans un solvant ;
mélanger des particules inorganiques dans le solvant ;
bien mélanger complètement le mélange pour former une pâte ;
orienter un seul côté du connecteur (140) vers le haut et couvrir une partie centrale (144) du connecteur (140) ;
appliquer la pâte sur le connecteur (140) à l'aide d'un procédé de revêtement par pulvérisation ou impression ; et
sécher le connecteur (140) revêtu de la pâte à une température comprise entre 80 et 120 °C afin d'obtenir le connecteur (140) avec un revêtement sur un seul côté.

11. Procédé selon la revendication 10, consistant en outre à :
commander l'épaisseur du revêtement sur un seule côté via le temps d'application et/ou la quantité de pâte appliquée.

12. Procédé selon la revendication 10 ou 11, dans lequel l'épaisseur du revêtement (230) formé sur la partie périphérique (142) du connecteur (140) est supérieure à l'épaisseur du revêtement (200) sur la partie de transition (146).

13. Batterie (100) comprenant l'ensemble capuchon selon l'une quelconque des revendications 1 à 9.
